# EUROPEAN PATENT APPLICATION

(11) **EP 1 208 729 A1**
(43) Date of publication of application: **29.05.2002**
(21) Application number: 01309821.5
(22) Date of filing: 22.11.2001
(51) Int. Cl.: A01B 33/14

(54) **Improvements in or relating to power harrows**

(30) Priority: 24.11.2000 GB 0028650
(71) Applicant: F. W. Pettit Limited, Southam, CV47 2NH (GB)
(72) Inventor: Mills, Martyn, Suffolk, IP22 1BA (GB)
(74) Representative: Roberts, David Leslie

(57) **Abstract**

A blade assembly for a power harrow has support means (8) formed with two recesses, each for accommodating a respective flange (15) of a respective harrow blade (16). The support means carries two retaining members (10) each of which is moveable between an operative position and an inoperative position, and is biased towards the operative position. When the retaining member is in its operative position, it locks the corresponding blade in position in the corresponding recess, whilst moving the retaining member into an inoperative position allows the insertion of a flange into the recess or the withdrawal of the flange from the recess. A power harrow may be provided with a plurality of such blade assemblies.

## Description

This invention relates to agricultural implements known as power harrows, and to blade assemblies for power harrows.

A conventional power harrow comprises a transverse beam or hull from which depend, at a number of spaced positions along the length of the beam, pairs of soil-working blades. The beam, which is hollow, accommodates a drive train which drives each blade pair about a vertical axis from the power take-off shaft of an agricultural tractor as the latter pulls the harrow across the land to be worked. The length of the beam or hull, i.e. the working width of the harrow, is typically between 4m and 8m and there may be between 5 and 16 blade pairs on the beam which is sometimes formed in two halves for folding to a reduced width for storage or transport on the road. Each blade is attached to its rotatable mounting on the beam by two nuts and bolts so replacement of worn or damaged blades can be time-consuming, a disadvantage which the present invention aims to alleviate.

According to one aspect of the invention there is a provided a blade assembly for a power harrow, the assembly comprising support means formed with two recesses, two harrow blades each having a support flange receivable in a respective recess, the support means carrying two retaining members each movable between an operative position in which the retaining member locks the corresponding blade in position in the corresponding recess, and an inoperative position allowing insertion of the flange into the recess or withdrawal of the flange from the recess, each retaining member being biased towards the operative position. The blade assembly of this invention thus provides for quick release or quick attachment of a blade.

The recesses may be defined by slots having a cross-sectional shape complementary to that of the support flange, with the latter having a hole through which the retaining member can extend when in the operative position, in order to lock the blade in the slot.

Each retaining member is preferably a peg biased to the operative position by a spring, conveniently a leaf spring mounted on the support means. To move the retaining member to the inoperative position, a tool may be provided in conjunction with the blade assembly. The tool is preferably shaped to engage a formation on the peg, such as a narrowed neck adjacent a head, to enable the tool to serve as a lever to move the peg, against its bias, to the inoperative position.

The support means preferably comprise a lower plate and an upper plate secured together, e.g. by welding, so that the slots are defined between the upper and lower plates. The upper plate may have threaded bores for attachment of the support means to a rotatable mounting plate carried by the beam, and these bores may be at a position and spacing matching the position and spacing of the bolts which attach conventional blades to the mounting plate, so enabling blade assemblies according to the invention to be fitted to existing power harrows.

The underside surface of the support means may be recessed to provide a degree of protection for the pegs.

According to another aspect of the invention there is provided a power harrow having a plurality of blade assemblies each according to said one aspect. Adjacent blade assemblies are preferably relatively displaced by 90° and rotate in mutually opposite directions.

A power harrow according to the invention will now be described, by way of example, with reference to the accompanying drawings, in which:-
**Figure 1** is a rear elevation of the harrow,
**Figure 2** is a plan view of the harrow,
**Figure 3** is a front view, to an enlarged scale, of one blade assembly of the harrow, and
**Figure 4** is an end view on the blade assembly of Figure 3.

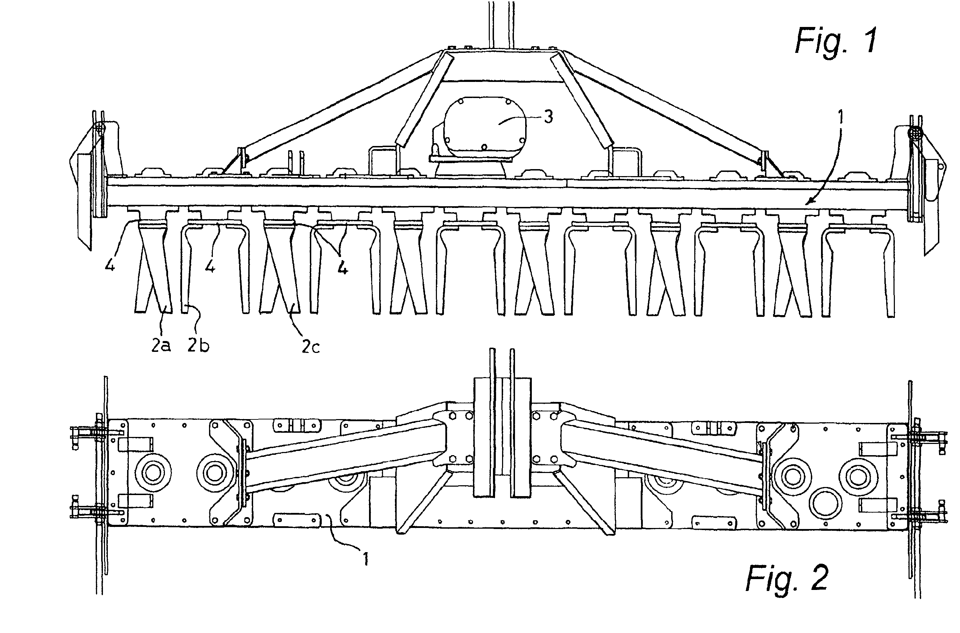

The power harrow comprises a transverse beam carrying along its length a number of pairs of rotor blades 2a, 2b, 2c... The beam 1 is hollow and accommodates a drive train consisting of a series of spur gears so that when a gear box 3 at the centre of the drive train is coupled to the power take-off shaft of a towing tractor the blade pairs 2a, 2b, 2c... are rotated about their respective vertical axes of symmetry, with adjacent blade pairs rotating in mutually opposite directions and being mounted on the beam 1 so that they are 90° offset one with respect to another, as shown in Figure 1. In use the tractor tows the harrow in a direction which is upwards in the plan view of Figure 2.

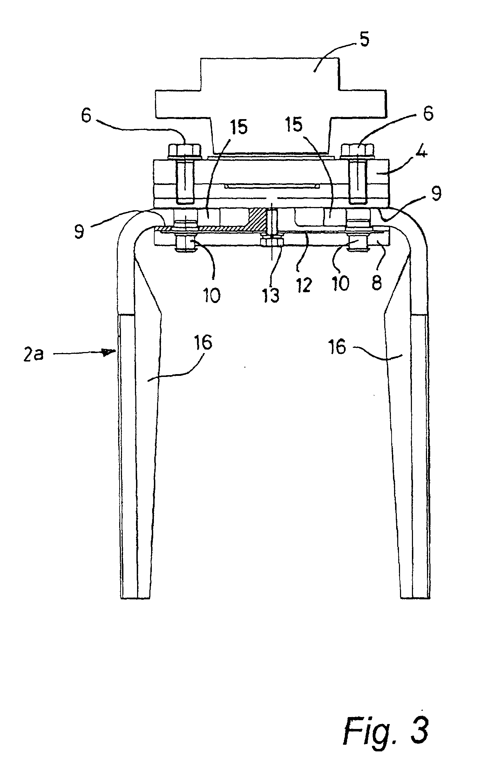

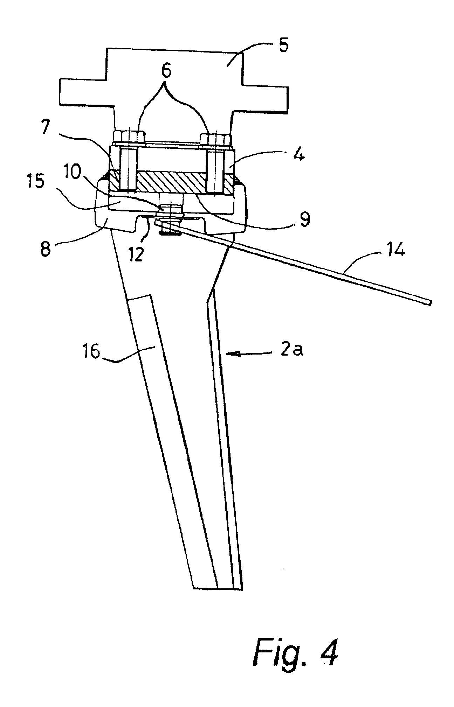

The invention is concerned with the mounting of each blade pair 2a, 2b, 2c... on the corresponding rotatable mounting plate 4 carried by the beam 1, and Figures 3 and 4 show the way in which a representative blade pair 2a is so mounted.

Referring to Figures 3 and 4, the drive from the drive train of spur gears in the beam 1 passes through a sealed bearing housing 5 to the rotatable mounting plate 4 to which the blade assembly is attached by two bolts 6. The blade assembly comprises an upper plate 7, into which the bolts 6 are threaded, and a lower plate 8 welded to the upper plate 7. On its upper surface the lower plate 8 has a shallow recess at each end so that the support means provided by the plates 7 and 8 presents two slots 9 with oppositely facing open ends.

The intermediate web of the lower plate 8 is formed with two holes through which pass the shanks of respective locking pegs 10 each of which is urged upwardly to an operative locking position, in which the peg 10 projects into the corresponding slot 9, by means of a biasing leaf spring 12 the middle of which is attached to the lower plate 8 by a central screw 13. The lower portion of the peg 10 has a reduced diameter neck adjacent an enlarged head or shoulder engageable with a specially shaped tool 14 (Figure 4) which is capable of being used in the manner of a lever to move the peg 10 downwardly against its spring loading to an inoperative, lowered position in which the peg 10 is clear of the slot 9. With the peg 10 thus withdrawn by means of the tool 14, a support flange 15 of a rotor blade 16 can be inserted into the corresponding slot 9, after which release of the peg 10 causes the peg 10 to enter a hole in the support flange 15 so as to lock the blade with respect to the support means. The cross-sectional shape of each slot 9 is complementary to that of the flange 15, so that each blade is firmly locked in position in the slot 9 (as a result of the elevis-like construction of the plates 7 and 8) but can be rapidly removed by use of the tool 14. The undersurface of the lower plate 8 is recessed to protect the lower portions of the pegs 10, preventing the pegs 10 being displaced accidentally.

## Claims

1. A blade assembly for a power harrow, the assembly comprising support means formed with two recesses, two harrow blades each having a support flange receivable in a respective recess, the support means carrying two retaining members each movable between an operative position in which the retaining member locks the corresponding blade in position in the corresponding recess, and an inoperative position allowing insertion of the flange into the recess or withdrawal of the flange from the recess, each retaining member being biased towards the operative position.

2. An assembly according to claim 1, in which the recesses defined by slots having a cross-sectional shape complementary to that of the support flange, with the latter having a hole through which the retaining member can extend when in the operative position, in order to lock the blade in the slot.

3. An assembly according to claim 1 or claim 2, in which each retaining member is a peg biased to the operative position by a spring, conveniently a leaf spring mounted on the support means.

4. An assembly according to any of the preceding claims in which the support means comprise a lower plate and an upper plate secured together.

5. An assembly according to any of the preceding claims, in which the upper plate has threaded bores for attachment of the support means to a rotatable mounting plate carried by a beam of a power harrow.

6. An assembly according to any of the preceding claims, in which the underside surface of the support means is recessed to provide a degree of protection for the pegs.

7. An assembly according to the preceding of claims 4, and a tool for use therewith, the tool being shaped to engage a formation on the peg, such as a narrowed neck adjacent a head, to enable the tool to serve as a lever to move the peg, against its bias, to the inoperative position.

8. A power harrow having a plurality of blade assemblies each according any of claims 1 to 6.

9. A power harrow according to claim 8, in which adjacent blade assemblies are relatively displaced by 90° and in use rotate in mutually opposite directions.

10. A blade assembly substantially as described herein, with reference to, and as illustrated in, the accompanying drawings.

11. A power harrow substantially as described herein, with reference to, and as illustrated in, the accompanying drawings.
